# DEMANDE DE BREVET EUROPEEN

(11) **EP 4 015 672 A1**
(43) Date de publication de la demande: **22.06.2022**
(21) Numéro de dépôt: 21214523.9
(22) Date de dépôt: 14.12.2021
(51) Int. Cl.: C23C 28/00, C23C 14/00, C23C 14/06, C23C 14/08, C23C 14/16, C23C 14/34, C25D 11/26

(54) **CARÉNAGE AÉRODYNAMIQUE ARRIÈRE DE MÂT DE MOTEUR D AÉRONEF**

(30) Priorité: 15.12.2020 FR 2013254
(71) Demandeur: Airbus Operations (S.A.S.), 31060 Toulouse Cedex 9 (FR)
(72) Inventeur: CADORET, Yannick, 31060 TOULOUSE (FR); DELON, Elodie, 31060 TOULOUSE (FR)
(74) Mandataire: Sarraméa, Claude

(57) **Abrégé**

Carénage aérodynamique arrière de mât de moteur d'aéronef L'invention concerne un carénage (4) aérodynamique arrière d'un mât de moteur d'aéronef comportant au moins deux panneaux latéraux (4a, 4b) caractérisé en ce que chaque panneau latéral (4a, 4b) est réalisé en titane ou en alliage de titane (6) et en ce qu'au moins une couche (7) protectrice anti-oxydation comportant une couche (8) composée d'un matériau (8a) céramique chimiquement inerte est déposée sur les faces externes de chaque panneau latéral (4a, 4b) qui, en utilisation, sont en contact avec un flux aérodynamique.

## Description

### Domaine technique

L'invention concerne un carénage aérodynamique arrière de mât de moteur d'aéronef.

### Etat de la technique antérieure

De manière connue, un mât d'accrochage de moteur d'aéronef comporte une structure rigide dénommée structure primaire (transmission des efforts), des moyens d'accrochage interposés entre le moteur et la structure rigide (attaches moteur) et une pluralité de structures secondaires assurant la ségrégation et le maintien des systèmes, tout en supportant des éléments de carénage aérodynamique.

Parmi les structures secondaires, on compte le carénage aérodynamique arrière, également dénommé Aft Pylon Fairing « APF », qui dispose d'une pluralité de fonctions parmi lesquelles on note la formation d'une barrière thermique ou anti-feu et la formation d'une continuité aérodynamique entre la sortie du moteur et le mât d'accrochage. Ce carénage arrière prend généralement la forme d'un caisson comprenant deux panneaux latéraux assemblés entre eux par des nervures ainsi qu'un plancher de protection thermique.

De par sa position au plus près de la sortie du moteur, ce carénage est soumis à des températures pouvant aller jusqu'à 600°C, en fonction des moteurs. C'est la raison pour laquelle il est fabriqué à partir d'alliage à haute performance à base de Nickel. Ce matériau présente l'avantage de présenter une excellent résistance mécanique et une bonne résistance au fluage à haute température, une bonne stabilité surfacique ainsi qu'une bonne résistance à la corrosion et à l'oxydation. Cependant, ce matériau présente le désavantage d'être lourd, ce qui pénalise son utilisation sur un avion où l'allègement de l'avion reste une préoccupation majeure d'un avionneur.

Il existe donc aujourd'hui un grand intérêt pour l'utilisation de matériaux à haute résistance et à faible densité adaptés à une utilisation à haute température tels que le titane et les alliages de titane. Ces alliages de titane, déjà utilisés dans le domaine aéronautique, pourraient remplacer l'alliage de Nickel pour fabriquer le carénage aérodynamique arrière. Un alliage de titane de type Ti-6AI-4V ou Ti-6242 est le candidat idéal pour ce carénage car ses propriétés mécaniques et son coût de fabrication sont compatibles avec l'utilisation considérée.

Cependant, une limitation sérieuse à l'utilisation de ces alliages de titane dans ce genre d'applications est la perte de résistance due à l'oxydation de ce matériau. En effet, ce type d'alliage doit être utilisé pour des éléments soumis à des températures ne dépassant pas les 350°C. Or, ce carénage aérodynamique arrière peut être soumis régulièrement à des températures de l'ordre de 600°C, ce qui accélère l'oxydation de l'alliage de titane, favorisant, par la même, la diffusion d'oxygène dans l'alliage. Cette diffusion d'oxygène dans l'alliage de titane favorise la formation d'une couche fragile proche de la surface du carénage. Cette couche fragile, riche en oxygène, oxyde la surface du carénage, conduisant à sa dégradation prématurée due à des mécanismes tels que la fissuration par exemple.

Pour prendre en compte de tels phénomènes, les études de dimensionnement de tels éléments réalisées par le bureau d'études appliquent un abattement des caractéristiques mécaniques pouvant aller jusqu'à 40%. En conséquence, ces carénages doivent être inspectés et changés régulièrement, induisant des coûts importants de maintenance.

Différentes études ont fait apparaitre qu'une protection sur le titane réduirait la diffusion d'oxygène dans le métal de sorte de ralentir la formation de la couche fragile riche en oxygène ce qui réduirait la diminution des caractéristiques mécaniques de l'alliage de titane.

Le document US5098540 décrit un revêtement composé d'un film continu d'atomes de chrome déposé selon le procédé de dépôt physique vapeur (PVD en anglais pour Physical Vapor Déposition) sur du titane afin d'offrir une protection contre l'oxydation substantielle jusqu'à environ 900°C. Cependant, aux températures d'utilisation du carénage aérodynamique arrière, ce revêtement présente l'inconvénient de se diffuser dans l'alliage de titane, modifiant la micro-structure interne de l'alliage et dégradant les propriétés mécaniques de l'alliage.

### Exposé de l'invention

Un objet de la présente invention est de résoudre tout ou partie des inconvénients de l'art antérieur mentionnés ci-dessus.

L'invention concerne un carénage aérodynamique arrière d'un mât de moteur d'aéronef comportant au moins deux panneaux latéraux, caractérisé en ce que chaque panneau latéral est réalisé en titane ou en alliage de titane et en ce qu'au moins une couche protectrice anti-oxydation comportant une couche composée d'un matériau céramique chimiquement inerte est déposée sur les faces externes de chaque panneau latéral qui, en utilisation, sont en contact avec un flux aérodynamique.

Cette couche protectrice anti-oxydation présente les avantages suivants : elle présente une bonne stabilité thermique et chimique pour des températures allant jusqu'à 700°C, ce qui est bien au-delà des températures auquel seront soumis les panneaux latéraux du carénage. Ce faisant, elle protège les panneaux contre la diffusion d'oxygène dans l'alliage de titane et limite leur oxydation, luttant également contre leur contamination éventuelle par des fluides. L'abattement lors du dimensionnement du carénage en est significativement réduit, diminuant ainsi les coûts de maintenance. Cette couche de protection offre également une protection contre l'érosion et une bonne résistance aux chocs.

Selon des modes particuliers de l'invention :
- La couche protectrice anti-oxydation est composée d'un empilement d'au moins deux couches de matériau céramique chimiquement inerte entre lesquelles est déposée au moins une couche métallique intermédiaire.
- La couche métallique intermédiaire est choisie parmi les matériaux métalliques suivants : Chrome, Titane, Aluminium,
- La face externe de chaque panneau latéral comporte une pluralité de couches protectrices anti-oxydation agencées par paire ente lesquelles une couche métallique est intercalée,
- La couche protectrice anti-oxydation a une épaisseur comprise entre 1 µm et 50µm,
- La couche de protection anti-oxydation a une épaisseur de l'ordre de 20µm,
- Le matériau céramique chimiquement inerte est choisi parmi les matériaux suivants : Al2O3, TiO2, Cr2O3, AlCrO, TiN, AIN, AlCrN, TiAIN, AITiN, CrN.

L'invention concerne un procédé de protection contre l'oxydation d'une face externe d'un panneau utilisé pour l'assemblage d'un carénage aérodynamique arrière réalisé en titane ou en alliage de titane, ledit procédé étant remarquable en ce qu'une couche protectrice anti-oxydation est déposée sur la face externe de chaque panneau latéral par un procédé de dépôt physique en phase vapeur, ledit procédé comportant les étapes suivantes :
- Dépôt du panneau latéral dans une enceinte sous vide,
- Vaporisation d'un matériau cible,
- Ajout en parallèle d'un gaz réactif,
- Formation du matériau céramique chimiquement inerte constitué de la réaction chimique entre le matériau cible vaporisé et le gaz réactif,
- Dépôt de la couche protectrice anti-oxydation comportant une couche de composée du matériau céramique chimiquement inerte sur la surface du panneau.

L'invention concerne aussi un procédé de protection contre l'oxydation d'une face externe d'un panneau utilisé pour l'assemblage d'un carénage aérodynamique arrière réalisé en titane ou en alliage de titane, ledit procédé étant remarquable en ce qu'une couche protectrice anti-oxydation composée d'un matériau céramique chimiquement inerte de TiO2 est déposée sur la face externe de chaque panneau latéral par un procédé de dépôt par anodisation ledit procédé comportant les étapes suivantes :
- Immersion du panneau latéral dans un bain électrolytique acide,
- Application au panneau latéral d'une tension comprise entre 5V et 30V,
- Création, par électrolyse, d'une couche protectrice anti-oxydation comportant une couche composée du matériau céramique chimiquement inerte sur la surface du panneau,
- Maintien du panneau latéral dans le bain électrolytique acide jusqu'à l'obtention de l'épaisseur de la couche protectrice anti-oxydation comprise entre 1µm et 50µm.

### Description de l'invention

L'invention sera mieux comprise à la lecture de la description qui va suivre, donnée uniquement à titre d'exemple, et se référant aux dessins annexés sur lesquels :
- La figure 1 représente un mât d'accrochage de moteur d'aéronef ;
- La figure 2 représente en coupe la structure d'un carénage aérodynamique selon un premier mode de réalisation de l'invention ;
- La figure 3 représente en coupe la structure d'un carénage aérodynamique selon un deuxième mode de réalisation de l'invention ;
- La figure 4 représente en coupe la structure d'un carénage aérodynamique selon un troisième mode de réalisation de l'invention ;

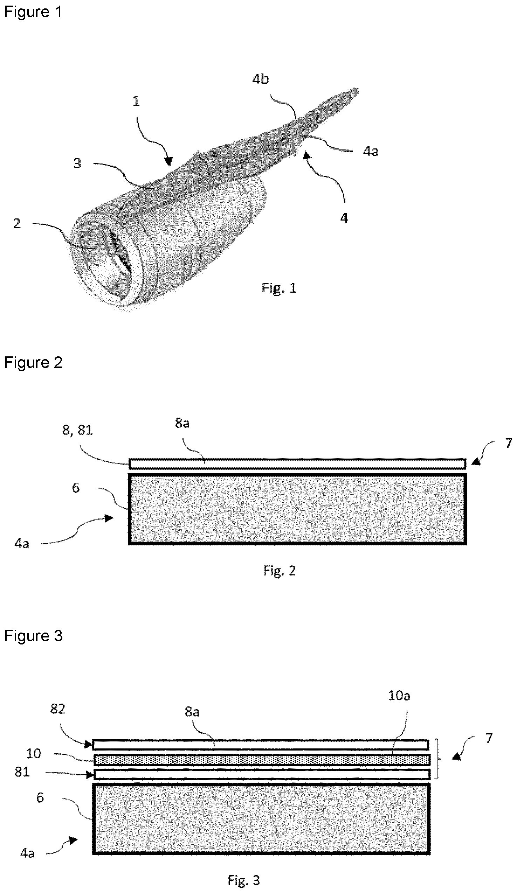

Sur la figure 1 est représenté un mât d'accrochage 1 de moteur 2 d'aéronef qui comporte une structure rigide dénommée structure primaire (non représentée) qui assure la transmission des efforts, des moyens d'accrochage (non représentés) interposés entre le moteur et la structure rigide, appelés attaches moteur et une pluralité de structures secondaires assurant la ségrégation et le maintien des systèmes, tout en supportant des éléments de carénage aérodynamique (carénage avant 3 et carénage arrière 4).

Parmi les structures secondaires, on compte le carénage aérodynamique arrière 4, également dénommé APF (acronyme pour Aft Pylon Fairing), qui dispose d'une pluralité de fonctions parmi lesquelles on note la formation d'une barrière thermique ou anti-feu et la formation d'une continuité aérodynamique entre la sortie du moteur 2 et le mât d'accrochage 1. Ce carénage arrière 4 prend généralement la forme d'un caisson comprenant deux panneaux latéraux 4a, 4b assemblés entre eux par des nervures ainsi qu'un plancher de protection thermique (non représenté). Ces panneaux latéraux 4a, 4b présentent une face externe qui, en utilisation, est en contact avec le flux aérodynamique.

Selon l'invention, les panneaux latéraux 4a et 4b sont fabriqués en alliage de titane (par exemple du Ti-6AI-4V ou Ti-6242) et non plus en alliage de nickel. Plus précisément, comme indiqué sur la figure 2 et selon un premier mode de réalisation, la face externe du panneau 4a (respectivement 4b) comporte une couche 6 d'alliage de titane sur laquelle est déposée une couche protectrice anti-oxydation 7 composée d'une couche 8, 81 d'un matériau céramique chimiquement inerte 8a. La couche protectrice 7 va générer une barrière conformée pour limiter la diffusion des atomes d'oxygène, dans les panneaux 4a, 4b du carénage 4, engendrés par l'élévation de température de l'environnement auquel sont soumis les panneaux latéraux 4a, 4b du carénage. En effet, les matériaux chimiquement inerte ne présentent quasiment aucune réactivité chimique.

Ainsi, les panneaux 4a et 4b présentent une bonne stabilité thermique et chimique pour des températures pouvant aller jusqu'à 600°C, en fonction des moteurs. Ces panneaux sont donc protégés contre la corrosion, diminuant fortement leur contamination par des fluides. Le comportement en fatigue de ces panneaux 4a et 4b est amélioré, l'abattement pour leur dimensionnement étant significativement réduit. Les coûts de maintenance sont réduits en conséquence.

En référence à la figure 3, il est représenté un second mode de réalisation dans lequel la couche protectrice 7 est composée d'un empilement d'au moins deux couches 8 de matériau céramique chimiquement inerte 8a entre lesquelles est déposée au moins une couche métallique intermédiaire 10 métallique. Dans ce mode de réalisation, la première couche 81 déposée sur la face externe des panneaux 4a, 4b ainsi que la dernière couche 82 en contact avec l'écoulement aérodynamique sont des couches 8 composées d'un matériau 8a céramique chimiquement inerte, ceci afin d'assurer une protection efficace contre la diffusion d'oxygène dans les panneaux 4a et 4b. La couche métallique intermédiaire 10 présente l'avantage d'améliorer la rigidité globale de la couche protectrice 7. La couche ainsi obtenue présente une meilleure résistance aux chocs et à l'érosion. Comme pour le mode de réalisation précédent, les panneaux 4a et 4b présentent une bonne stabilité thermique et chimique.

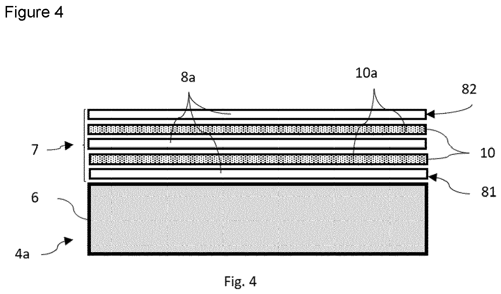

Selon une variante du deuxième mode de réalisation, représenté sur la figure 4, la face externe de chaque panneau latéral 4a, 4b comporte une couche protectrice anti-oxydation 7 composée d'une pluralité de couches 8 agencées par paire entre lesquelles une couche métallique intermédiaire 10 est intercalée. On observe donc un empilement alterné de couches 8 et de couches métalliques intermédiaires 10. Sur cette figure, la couche protectrice 7 est composée de trois couches 8 de matériau inerte 8a et de deux couches métalliques intermédiaires 10. Sans sortir du cadre de l'invention, il peut être envisagé de répéter cet empilement de sorte à obtenir une couche protectrice 7 composée de plusieurs couches 8 de matériau inerte 8a et de plusieurs couches métalliques intermédiaires 10. Dans cette variante de réalisation, la première couche 81 déposée sur la face externe des panneaux 4a, 4b ainsi que la dernière couche 82 en contact avec l'écoulement aérodynamique sont des couches 8 composées d'un matériau 8a céramique chimiquement inerte, ceci afin d'assurer une protection efficace contre la diffusion d'oxygène dans les panneaux 4a et 4b.

Le dépôt physique en phase vapeur d'un revêtement est largement répandu pour améliorer la résistance au frottement de pièces mécaniques et pour lutter contre l'usure des outils de coupe. Ces revêtements déposés par dépôt physique en phase vapeur sont durs et résistent à l'usure sur les outils de coupe, réduisant leurs coûts de production et améliorant leur productivité.

Or, dans le cas particulier du carénage 4, il n'est pas recherché l'amélioration de sa résistance car il n'est globalement soumis qu'à l'écoulement aérodynamique, à la différence des pièces mécaniques en frottement et des outils de coupe qui évoluent dans un environnement plus contraignant d'un point de vue friction.

Au contraire, le dépôt d'un matériau céramique chimiquement inerte 8a déposé par dépôt physique en phase vapeur va générer une barrière conformée pour limiter la diffusion, dans les panneaux 4a, 4b du carénage 4, des atomes d'oxygène engendrés par l'élévation de température de l'environnement auquel sont soumis lesdits panneaux latéraux de ce carénage 4.

L'invention concerne aussi un procédé de réalisation dans lequel la couche protectrice 7 des trois modes de réalisation précédemment décrits est déposée par dépôt physique en phase vapeur.

De manière à réaliser la couche protectrice 7, du premier mode de réalisation, une couche 8, 81 composée d'un matériau 8a céramique chimiquement inerte est déposée par dépôt physique en phase vapeur sur la face externe des panneaux latéraux 4a, 4b. La couche 8, 81 est, en utilisation, en contact avec le flux aérodynamique.

Afin de réaliser une couche protectrice anti-oxydation 7 selon le deuxième mode de réalisation, une première couche protectrice 8, 81 composée d'un matériau 8a céramique chimiquement inerte est déposée par dépôt physique en phase vapeur sur la face externe des panneaux latéraux 4a, 4b. Sur cette couche 81, une couche métallique intermédiaire 10 est ensuite déposée par dépôt physique en phase vapeur. Enfin, une dernière couche 8, 82 est déposée par dépôt physique en phase vapeur sur la surface de cette couche métallique intermédiaire 10. Cette dernière couche 82 est une couche 8 composée d'un matériau 8a céramique chimiquement inerte, ceci afin d'assurer une protection efficace contre la diffusion d'oxygène dans les panneaux 4a et 4b. Cette dernière couche 82, en utilisation, est en contact avec le flux aérodynamique.

Afin de réaliser une couche protectrice anti-oxydation 7 selon la variante du troisième mode de réalisation, une première couche protectrice 8, 81 composée d'un matériau 8a céramique chimiquement inerte est déposée par dépôt physique en phase vapeur sur la face externe des panneaux latéraux 4a, 4b. Sur cette couche 8, 81, une première couche métallique intermédiaire 10 est déposée par dépôt physique en phase vapeur. Une deuxième couche 8 de matériau 8a est déposée par dépôt physique en phase vapeur sur la surface de la première couche métallique intermédiaire 10. Puis, une deuxième couche intermédiaire métallique 10 est déposée par dépôt physique en phase vapeur sur cette deuxième couche 8 de matériau 8a. Enfin, une dernière couche 8, 82 est déposée par dépôt physique en phase vapeur sur la surface de cette deuxième couche métallique intermédiaire 10. Comme précédemment, cette dernière couche 82 est une couche 8 composée d'un matériau 8a céramique chimiquement inerte, ceci afin d'assurer une protection efficace contre la diffusion d'oxygène dans les panneaux 4a et 4b. Cette dernière couche 82, en utilisation, est en contact avec le flux aérodynamique.

Afin de réaliser un dépôt physique en phase vapeur, le panneau 4a, 4b est déposé dans une enceinte sous vide. Le matériau cible (Aluminium, Chrome, Titane) qui est utilisé est le matériau entrant dans la composition du matériau 8a céramique chimiquement inerte. Ce matériau cible est vaporisé par exemple par bombardement de gaz ionisé. En fonction du mode de vaporisation du matériau cible, la température de vaporisation peut aller de 70°C à 600°C. En parallèle, un gaz réactif (Oxygène ou Azote) est ajouté afin qu'il se mélange à la vapeur métallique créée à partir du matériau cible utilisé. Ce gaz forme, avec la vapeur métallique créée, le matériau 8a céramique chimiquement inerte. Le matériau céramique chimiquement inerte 8a est donc le résultat de la réaction chimique entre le matériau cible vaporisé (Chrome, Titane ou Aluminium) et le gaz réactif (Oxygène ou Azote). Ce matériau 8a céramique se dépose sur la surface du panneau latéral 4a, 4b afin de former la couche 8 de couche protectrice anti-oxydation 7.

Selon ce procédé de dépôt physique en phase vapeur, le matériau 8a céramique chimiquement inerte est choisi parmi les matériaux suivants : Al2O3, TiO2, Cr2O3, AlCrO, TiN, AIN, AlCrN, TiAIN, AITiN, CrN.

Selon ce même procédé de dépôt physique en phase vapeur, la couche métallique intermédiaire 10 peut être choisie parmi les matériaux 10a suivants, sans que cette liste soit limitative : Chrome, Titane ou Aluminium.

Cette couche métallique 10 est préférentiellement choisie dans le même matériau que le matériau cible vaporisé utilisé pour générer le matériau 8a céramique.

Selon un deuxième procédé de réalisation de l'invention, une unique couche protectrice 7 composée d'une couche 8 de matériau 8a est déposée par un procédé d'anodisation sur la face externe des panneaux latéraux 4a et 4b. Selon ce deuxième procédé de réalisation, le matériau 8a céramique chimiquement inerte est composé d'une couche de TiO2.

Selon ce deuxième procédé, le panneau latéral 4a, 4b est immergé dans un bain électrolytique acide, par exemple un bain d'acide sulfurique dilué. Le panneau latéral est relié à l'anode d'un générateur de tension. Une tension habituellement comprise entre 5V et 30V est délivrée et appliquée au panneau latéral 4a, 4b. La réaction d'électrolyse en milieu acide va conduire à la création d'une couche de dioxyde de titane (TiO2) à la surface du panneau 4a, 4b. Le panneau 4a, 4b est maintenu dans le bain électrolytique acide jusqu'à l'obtention de l'épaisseur de la couche protectrice anti-oxydation 7 voulue.

L'avantage supplémentaire du dépôt physique en phase vapeur ou du dépôt par anodisation est de pouvoir déposer de fines couches du matériau 8a. L'objectif de cette couche n'étant pas d'agir en tant que barrière thermique, il n'est pas nécessaire que la couche protectrice anti-oxydation 7 présente une forte épaisseur. Ceci aurait l'inconvénient d'augmenter la masse du carénage 4 sans pour autant être plus bénéfique contre l'oxydation. En effet, la présence du matériau céramique chimiquement inerte 8a agit en tant que barrière physique qui fait obstacle aux atomes d'oxygène, limite leur diffusion dans l'alliage de titane 6 et qui ralentit fortement la corrosion de ce matériau. En conséquence, l'épaisseur de la couche protectrice anti-oxydation 7 selon l'un quelconque des modes de réalisation précédemment décrit, peut varier entre 1µm et 50µm. Elle sera de préférence de l'ordre de 20µm.

La couche protectrice anti-oxydation 7 étant fine, elle présente une forte densité ce qui lui permet aussi d'offrir une protection contre l'érosion ainsi qu'une bonne résistance aux chocs.

Ainsi, quel que soit le procédé utilisé pour déposer la couche protectrice anti-oxydation 7 composé d'au moins une couche 8 de matériau chimiquement inerte 8a, ce matériau 8a s'introduit au niveau moléculaire dans les espaces laissés libres par les atomes d'alliage de titane, obstruant ces espaces, ce qui empêche les atomes d'oxygène générés par l'élévation de la température avoisinante de se diffuser dans la couche d'alliage en titane 6. Le matériau 8a étant intrinsèquement inerte, il présente une stabilité chimique et thermique qui ne sera ni modifiée ni altérée par les conditions extérieures dans lequel il sera amené à évoluer : élévation de température, écoulement aérodynamique, ...

Ainsi, que le dépôt soit effectué par dépôt physique en phase vapeur ou par un procédé d'anodisation, la limitation de la diffusion des atomes d'oxygène dans l'alliage de titane 6 des panneaux latéraux 4a et 4b est assurée d'une manière durable.

De cette manière, les panneaux 4a et 4b selon les différents modes de réalisation de l'invention présentent une bonne stabilité thermique et chimique pour des températures pouvant aller jusqu'à 600°C, en fonction des moteurs. En conséquence, ces panneaux sont protégés contre la corrosion, diminuant fortement leur contamination par des fluides. Le comportement en fatigue de ces panneaux 4a et 4b est amélioré, l'abattement pour leur dimensionnement étant significativement réduit. Les coûts de maintenance sont réduits en conséquence.

## Revendications

1. Carénage (4) aérodynamique arrière d'un mât de moteur d'aéronef comportant au moins deux panneaux latéraux (4a, 4b), **caractérisé en ce que** chaque panneau latéral (4a, 4b) est réalisé en titane ou en alliage de titane (6) et **en ce qu'**au moins une couche protectrice anti-oxydation (7) comportant une couche (8) composée d'un matériau (8a) céramique chimiquement inerte est déposée sur les faces externes de chaque panneau latéral (4a, 4b) qui, en utilisation, sont en contact avec un flux aérodynamique.

2. Carénage (4) selon la revendication 1, **caractérisé en ce que** la couche (7) protectrice anti-oxydation est composée d'un empilement d'au moins deux couches (8) de matériau céramique chimiquement inerte (8a) entre lesquelles est déposée au moins une couche (10) métallique intermédiaire.

3. Carénage (4) selon la revendication 2 **caractérisé en ce que** la couche (10) métallique intermédiaire est choisie parmi les matériaux (10a) suivants : Chrome, Titane, Aluminium.

4. Carénage (4) selon les revendications 2 et 3 **caractérisé en ce que** la face externe de chaque panneau latéral (4a, 4b) comporte une couche (7) protectrice anti-oxydation composée d'une pluralité de couches (8) protectrices anti-oxydation agencées par paire entre lesquelles une couche (10) métallique est intercalée.

5. Carénage (4) selon l'une quelconque des revendications précédentes, **caractérisé en ce que** la couche protectrice anti-oxydation (7) a une épaisseur comprise entre 1µm et 50µm.

6. Carénage (4) selon la revendication 5, **caractérisé en ce que** la couche de protection anti-oxydation (7) a une épaisseur de l'ordre de 20µm.

7. Carénage (4) selon l'une quelconque des revendications précédentes **caractérisé en ce que** le matériau (8a) céramique chimiquement inerte est choisi parmi les matériaux suivants : Al2O3, TiO2, Cr2O3, AlCrO, TiN, AIN, AlCrN, TiAIN, AITiN, CrN.

8. Procédé de protection contre l'oxydation d'une face externe d'un panneau utilisé pour l'assemblage d'un carénage aérodynamique arrière selon l'une quelconque des revendications précédentes, réalisé en titane ou en alliage de titane, **caractérisé en ce que** la couche protectrice anti-oxydation (7) est déposée sur les faces externes de chaque panneau latéral (4a, 4b) par un procédé de dépôt physique en phase vapeur, ledit procédé comportant les étapes suivantes :
• Dépôt du panneau latéral (4a, 4b) dans une enceinte sous vide,
• Vaporisation d'un matériau cible,
• Ajout en parallèle d'un gaz réactif,
• Formation du matériau (8a) céramique chimiquement inerte constitué de la réaction chimique entre le matériau cible vaporisé et le gaz réactif,
• Dépôt de la couche protectrice anti-oxydation (7) comportant une couche (8) composée du matériau (8a) céramique chimiquement inerte sur la surface du panneau (4a, 4b).

9. Procédé de protection contre l'oxydation d'une face externe d'un panneau utilisé pour l'assemblage d'un carénage aérodynamique arrière selon la revendication 1, réalisé en titane ou en alliage de titane, **caractérisé en ce que** la couche protectrice anti-oxydation (7) composée d'un matériau (8a) céramique chimiquement inerte d'oxyde de titane est déposée sur les faces externes de chaque panneau latéral (4a, 4b) par un procédé de dépôt par anodisation, ledit procédé comportant les étapes suivantes :
• Immersion du panneau latéral (4a, 4b) dans un bain électrolytique acide,
• Application au panneau latéral (4a, 4b) d'une tension comprise entre 5V et 30V,
• Création, par électrolyse, d'une couche protectrice anti-oxydation (7) comportant une couche (8) composée du matériau (8a) céramique chimiquement inerte sur la surface du panneau (4a, 4b),
• Maintien du panneau latéral (4a, 4b) dans le bain électrolytique acide jusqu'à l'obtention de l'épaisseur de la couche protectrice anti-oxydation (7) comprise entre 1µm et 50µm.
